Europäisches Patentamt

European Patent Office

Office européen des brevets

(11) Numéro de publication: **0 369 833 B1**

# FASCICULE DE BREVET EUROPEEN

(45) Date de publication de fascicule du brevet: **22.12.93**   (51) Int. Cl.5: **H04L   12/40**

(21) Numéro de dépôt: **89402761.4**

(22) Date de dépôt: **06.10.89**

(54) **Unité d'accès à un support de transmission d'un réseau local.**

(30) Priorité: **08.11.88 FR 8814543**

(43) Date de publication de la demande:
**23.05.90 Bulletin   90/21**

(45) Mention de la délivrance du brevet:
**22.12.93 Bulletin   93/51**

(84) Etats contractants désignés:
**DE FR GB IT NL SE**

(56) Documents cités:
**EP-A- 0 164 244
FR-A- 2 570 563**

**ELECTRONIC DESIGN, vol. 33, no. 8, avril
1985, pages 189-194,196,198,200, Hasbrouck
Heights, New Jersey, US; S. COOPER et al.:
"Coded data transceiver shares a common
bus, eases system upgrading"**

(73) Titulaire: **BULL S.A.
Tour BULL,
1, place Carpeaux
F-92800 Puteaux(FR)**

(72) Inventeur: **Richard, Claude
26, rue André Sabatier
F-92240 Malakoff(FR)**
Inventeur: **Malgogne, Bernard
24 bis, rue de Lamballe
F-28100 Dreux(FR)**

(74) Mandataire: **Gouesmel, Daniel et al
BULL S.A.,
Tour BULL Cédex 74,
PC/TB2803
F-92039 Paris La Défense (FR)**

**Description**

La présente invention concerne une unité d'accès à un support de transmission d'un réseau local du type à méthode d'accès à test de porteuse et détection de collision (CSMA/CD). Elle est plus particulièrement applicable aux réseaux locaux de type ETHERNET dont le support de transmission est constitué, aussi bien pour l'émission que pour la réception des signaux, par une paire de fils téléphoniques.

De manière générale, un réseau de transmission de données est constitué par une pluralité d'unités, généralement appelées "équipement terminal de traitement de données", en abrégé, ETTD, (Data Terminal Equipment, en langue anglaise, en abrégé, DTE), ou encore terminaux ou stations, par commodité de langage. Ces ETTD communiquent entre eux par l'intermédiaire d'un système de transmission. Ce dernier, par exemple, peut avoir une architecture en bus et être constitué par deux paires de fils téléphoniques (une pour l'émission, l'autre pour la réception) ou un câble coaxial.

Les réseaux locaux sont des réseaux de transmission limités à une enceinte limitée en surface (immeubles, usines, campus, hôpital) où les distances entre stations vont de quelques mètres ou dizaines de mètres à quelques kilomètres. La transmission des données s'effectue à des débits de l'ordre de 100 kbits/s à quelques dizaines de Mbits/s.

Du fait que les stations d'un réseau local à architecture en bus partagent un seul système de transmission (on dit encore ligne de transmission), il importe qu'une seule station émette à la fois sur cette même ligne. Pour résoudre ce problème, les stations ou terminaux sont généralement munis d'organes de décision qui n'autorisent l'envoi de messages qu'à condition que celle-ci soit libre. Pour cela, selon une méthode préférée, chaque terminal surveille en permanence les signaux présents sur la ligne et en cas de présence d'un message sur celle-ci, aucun autre message n'est autorisé à être émis par une quelconque des stations autre que la station émettrice. Ainsi les méthodes d'accès conçues pour les réseaux locaux en bus visent à limiter les conflits d'accès dus à l'émission simultanée par plusieurs stations. Ce procédé est connu sous le sigle anglo-saxon CSMA.

Cependant, malgré ces précautions, il peut se produire qu'une station ne détecte pas la présence d'un message sur la ligne de transmission au moment où elle commande elle-même l'envoi d'un message, bien qu'une autre station soit en train d'émettre. Dans ce genre de réseaux, cette situation appelée "collision" est impossible à éviter totalement, notamment à cause du délai de propagation des signaux sur la ligne.

En d'autres termes, pour une station déterminée une collision est définie comme la présence simultanée de son propre signal d'émission et d'un signal émis par une autre station (qui, pour elle, est un signal de réception).

Pour remédier à cette difficulté, on utilise généralement un dispositif appelé détecteur de collision qui interrompt l'émission d'un message en cours lorsqu'une telle situation a été détectée. La détection d'une collision provoque l'annulation de la transmission puis une nouvelle tentative d'émission est effectuée, l'émission n'ayant lieu que si la ligne de transmission est à nouveau libre. Cette méthode est connue sous le sigle anglo-saxon CSMA/CD (tiré de l'expression anglaise "Carrier sense multiple access with collision detection").

Les réseaux locaux de type CSMA/CD ont été normalisés par le Comité IEEE de l'Institute of Electrical and Electronic Engineers, sous la forme d'une norme dite 802.3, (reprise par l'I.S.O., Organisation Internationale de Normalisation, sous la forme de la norme ISO 8 802.3), dont les dispositions essentielles sont les suivantes :

- un ETTD en tant qu'émetteur de données est soit silencieux, soit en train d'émettre des données,
- un ETTD, lorsqu'il est silencieux, peut, en tant que récepteur, soit détecter un silence, soit recevoir des données provenant d'un ou plusieurs autres ETTD. Si les données reçues proviennent simultanément de plusieurs ETTD, la valeur de ces données est sans signification, ce qui est le cas lorsqu'on est en présence d'une collision.
- un ETTD qui est en train d'émettre peut, en tant que récepteur, soit détecter que son émission se déroule normalement (sans collision avec les données émises par un ou plusieurs autres ETTD), soit qu'une collision a lieu.

Cette norme définit également le format des trames. La trame est le message individuel. Elle est structurée, comporte un message de début et de fin, des signaux de synchronisation pour en déduire l'horloge, l'adresse de la station à laquelle est destiné le message, l'adresse de la station émettrice, la longueur des données, les données utiles, etc . En d'autres termes, la trame est le bloc élémentaire d'informations émises par une station quelconque, qui transite sur la ligne de transmission.

La norme 802.3 définit de plus le protocole régissant le dialogue entre les stations. Celui-ci définit les règles d'accès aux différentes stations et constitue donc un système qui ordonnance la conversation entre celles-ci sans la hiérarchiser.

Dans la pratique courante actuelle, il existe deux réseaux locaux de type CSMA/CD, à savoir le réseau local de type ETHERNET (ETHERNET est une marque déposée le 6 février 1981 par XEROX CORPORATION) et le réseau local de type STARLAN, le débit de transmission des données pour le premier étant de 10 Mbits/s alors que le débit pour le second est de 1 Mbit/s.

La configuration physique d'un réseau local de type ETHERNET est la suivante :

- le support de transmission normalisé est un câble coaxial d'impédance caractéristique 50 ohms équipé à chaque extrémité d'un bouchon terminateur de 50 ohms. Chaque terminal est raccordé au câble coaxial par l'intermédiaire d'une unité d'accès au support (medium access unit, en anglais), plus communément appelées "transceiver" selon la terminologie anglo-saxonne.

Le réseau de base ou segment élémentaire est constitué d'un segment de câble le long duquel sont répartis des raccordements d'unités d'accès.

De manière plus générale, un réseau local est formé par un ensemble de plusieurs réseaux de base entre lesquels sont placés des répéteurs. Ceux-ci retransmettent sur un câble les signaux qu'ils reçoivent sur l'autre tout en régénérant leur qualité initiale. Le fonctionnement d'un réseau à plusieurs segments est assuré si le réseau est constitué d'un segment principal et de segments secondaires, chaque segment secondaire étant relié au segment principal soit par un répéteur soit par une paire de répéteurs reliés l'un à l'autre.

La configuration physique d'un réseau local de type STARLAN est la suivante :

Le support de transmission normalisé est constitué par deux paires de fils téléphoniques, l'une pour l'émission, l'autre pour la réception.

Le réseau de base est constitué par un ensemble de terminaux reliés chacun par l'intermédiaire d'une paire de fils téléphoniques à un même noyau central (appelé hub dans la terminologie anglo-saxonne). Ce noyau central joue le même rôle que les répéteurs dans un réseau local de type ETHERNET, c'est-à-dire retransmet sur chacune des paires de fils téléphoniques les signaux provenant de l'une quelconque des stations tout en régénérant leur qualité initiale. Plusieurs réseaux de base comprenant donc chacun un noyau central peuvent être reliés entre eux par d'autres noyaux centraux et constituer ainsi le réseau local proprement dit. La détection des collisions s'effectue au niveau de chaque noyau central.

L'une des conséquences du progrès technologique actuel est que les paires de fils téléphoniques peuvent désormais transporter des informations avec des débits de l'ordre de 10 Mbits/s, voire davantage, alors que ce n'était pas le cas il y a encore quelques années. Il s'ensuit que l'une des tendances actuelles du développement des réseaux locaux de type ETHERNET consiste à utiliser au moins pour les réseaux de base, comme support de transmission, deux paires de lignes téléphoniques au lieu d'un câble coaxial. En effet, la paire téléphonique est beaucoup moins coûteuse d'une part, et d'autre part, son précâblage dans les immeubles est plus simple et moins cher que le précâblage d'un câble coaxial. De ce fait, on utilise alors, au moins pour les réseaux de base, des noyaux centraux qui jouent le même rôle que ceux utilisés dans les réseaux STARLAN.

On cherche à utiliser dans les réseaux locaux ETHERNET utilisant comme support de transmission deux paires de fils téléphoniques, la plupart des éléments constitutifs d'un réseau local ETHERNET utilisant comme support de transmission un câble coaxial.

De tels réseaux sont, par exemple décrits dans la demande de brevet européen N° 0 164 244. Dans un tel réseau, chaque station de travail est reliée au support de transmission par l'intermédiaire d'une unité de réception et d'émission et d'un répéteur qui régénère et amplifie les signaux provenant ou allant vers la station. L'unité de réception et d'émission est reliée au répéteur par une double paire de fils téléphoniques, une pour l'émission et l'autre pour la réception.

Ceci est notamment le cas pour le circuit intégré constituant le transceiver utilisé dans le réseau local ETHERNET à câble coaxial. Un tel transceiver est fabriqué par exemple par la Société "National Semiconductor" (NS) sous la dénomination commerciale DP 8392.

Les éléments constitutifs essentiels d'un tel transceiver sont les suivants :

- un générateur de courant d'émission qui reçoit les signaux émis par la station associée au transceiver et qui délivre un signal d'émission sous forme d'un courant polarisé (à valeur moyenne non nulle),
- un générateur de signaux de réception recevant les signaux transmis par le support provenant d'une autre station que la station associée sous forme d'un signal polarisé (à valeur moyenne non nulle),
- un circuit d'analyse du signal reçu par la station associée, recevant d'une part le signal émis par celle-ci et d'autre part tout signal émis par une autre station, ce circuit d'analyse envoyant à la station associée un signal indiquant si elle est seule à émettre ou s'il y a une collision. Le signal émis par la station qui est reçu par le circuit d'analyse précité provient du câble coaxial : en effet, tout courant émis par une station, crée une tension dans les bouchons terminateurs qui est vue par toutes les stations par l'intermédiaire de leur transceiver. Ce circuit d'analyse est en fait un circuit de détection de collisions. Dans la pratique, il est constitué par un circuit à seuil permettant de déterminer si la valeur moyenne de la tension du signal présent sur le câble coaxial est supérieure à une valeur déterminée égale à la valeur moyenne normale de la tension du signal d'émission.

Lorsqu'on remplace, en tant que support de transmission, le câble coaxial par une paire de fils téléphoniques dont l'une est physiquement indépendante de l'autre, le problème suivant apparaît :

- le support de transmission ne renvoie plus au transceiver associé à la station émettrice, le signal d'émission de ce dernier, la station ignorant alors si son propre signal d'émission reçu par le transceiver a bien été transmis par celui-ci aux autres stations par l'intermédiaire du support de transmission.
- lorsque la station émet, son propre signal d'émission ne lui étant pas renvoyé par le support de transmission du fait de l'indépendance des deux paires de fils téléphoniques l'une par rapport à l'autre, il est impossible au transceiver de détecter toute collision. Cela peut entraîner à la limite la possibilité pour chacune des stations d'un même segment élémentaire de réseau d'émettre en même temps que les autres, puisque chacune d'elle est incapable de détecter une collision.

Une première solution consisterait à munir les noyaux centraux de détecteurs de collision comme c'est le cas dans les réseaux locaux de type STARLAN. Ce n'est pas la solution qui a été retenue pour les noyaux centraux des réseaux ETHERNET à paire torsadée.

Le but que se propose l'invention est donc, dans un réseau local de type ETHERNET, dont le support de transmission est constitué par deux paires de fils téléphoniques, de réaliser un transceiver, dont une partie des éléments constitutifs sont ceux des transceivers utilisés dans le réseau ETHERNET à câble coaxial. Le transceiver selon l'invention doit donc :

- permettre à toute station qui émet de savoir à tout moment que son signal d'émission reçu par le transceiver a bien été transmis par celui-ci sur le support de transmission,
- permettre à toute station qui émet de savoir s'il y a collision sur le réseau et par suite selon la procédure CSMA/CD, d'interrompre son émission et de la réitérer, selon la procédure normalisée IEEE 802.3 quelques instants plus tard.

Selon l'invention, l'unité d'accès à un support de transmission (transceiver) d'un réseau local de type à méthode d'accès à test de porteuse et détection de collision (CSMA/CD), qui comprend au moins une pluralité de stations reliées entre elles en étoile à un noyau central, chaque station étant associée à une unité d'accès, l'unité comportant :

- un générateur de courant d'émission recevant les signaux émis par la station associée et délivrant un signal d'émission sous forme d'un courant polarisé à valeur moyenne non nulle,
- un générateur de signaux de réception recevant les signaux provenant d'une autre station transmis par le support sous forme d'une tension polarisée à valeur moyenne non nulle,
- un détecteur de collision recevant d'une part le signal émis par la station et d'autre part tout signal émis par une autre station et envoyant à la station associée un signal indiquant si elle est seule à émettre ou s'il y a collision, lorsqu'il reçoit un signal dont la tension moyenne excède, en valeur absolue, une valeur prédéterminée,
- est caractérisée en ce que, le support de transmission étant constitué par deux paires de fils téléphoniques, l'une pour l'émission et l'autre pour la réception, elle comprend un circuit de simulation de collision simulant la superposition physique des signaux d'émission et de réception,

lequel comprend :

- un circuit détecteur de toute émission de la station associée, recevant la première tension d'émission, émettant un premier signal de validation indiquant que la station associée émet,
- un circuit détecteur de signal de réception, recevant le signal de réception transmis par la paire téléphonique de réception et émettant un second signal de validation indiquant la présence d'un signal de réception sur la paire de réception,
- un circuit d'adaptation de la tension d'émission recevant d'une part la première tension d'émission et d'autre part le second signal de validation et délivrant soit la seconde tension d'émission lorsque la station associée est seule à émettre, soit le signal de simulation de collision,
- un multiplexeur recevant le premier et le second signal de validation, le signal de réception, et la seconde tension d'émission ou le signal de simulation de collision, et transmettant soit le signal de réception lorsque la station associée n'est pas en train d'émettre, soit la seconde tension d'émission lorsque la station associée est seule à émettre, soit le signal de simulation de collision lorsqu'il y a collision.

D'autres caractéristiques et avantages de la présente invention apparaîtront dans la description suivante donnée à titre d'exemple non limitatif et en se référant aux dessins annexés.

Sur ces dessins :

- La figure 1 montre sous forme de schéma simplifié comment est constitué un segment élémentaire d'un réseau local de type ETHERNET utilisant comme support de transmission deux paires de fils téléphoniques,
- La figure 2 est un schéma fonctionnel simplifié d'un transceiver pour réseau local ETHERNET dont le support de transmission est un coaxial selon l'art antérieur,
- La figure 3 est un chronogramme de différents signaux émis et reçus par le transceiver de la figure 2,
- La figure 4 montre un transceiver associé à une station d'un réseau local de type ETHERNET utilisant deux paires de fils téléphoniques comme support de transmission, selon l'invention,
- La figure 5 est un mode de réalisation particulier du circuit de simulation de collision du transceiver selon l'invention,

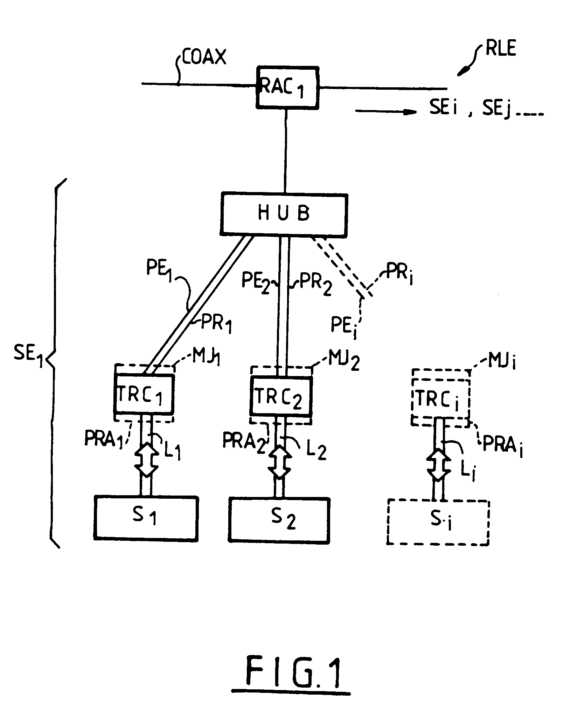

Afin de mieux comprendre comment est constitué et comment fonctionne le transceiver selon l'invention, on effectuera quelques rappels sur la manière dont sont constitués les réseaux locaux de type ETHERNET utilisant comme support de transmission deux paires de fils téléphoniques, les transceivers ainsi que leur mode de fonctionnement, comme il est illustré aux figures 1, 2, 3.

On considère tout d'abord la figure 1.

Celle-ci représente un segment élémentaire $SE_1$ appartenant à un réseau local de type ETHERNET à savoir RLE. Ce segment $SE_1$ comprend une pluralité de stations $S_1$, $S_2$, ..., Si, ..., etc, auxquelles sont associés les transceivers $TRC_1$, $TRC_2$, ..., $TRC_i$, ..., etc. Chaque station est raccordée aux transceivers associés par l'intermédiaire d'une ligne de transmission. Ainsi les stations $S_1$, $S_2$, ..., $S_i$, etc, sont reliées aux transceivers $TRC_1$, $TRC_2$, $TRC_i$, ..., etc, par les lignes de transmission $L_1$, $L_2$, ..., $L_i$, etc. Ces lignes de transmission comportent par exemple une paire de fils pour l'émission, une paire de fils pour la réception, une paire de fils pour la détection de collision, une paire de fils pour l'alimentation du transceiver en tension continue. Chacun des transceivers $TRC_1$ à $TRC_i$ est raccordé à la ligne de transmission correspondante $L_1$ à $L_i$ par l'intermédiaire de prises de raccordement $PRA_1$ à $PRA_i$ également appelées "prises 15 points" conformes aux normes définies dans IEEE 802.3.

Les transceivers $TRC_1$, $TRC_2$, ..., $TRD_i$, ..., etc, sont reliés par l'intermédiaire de deux paires de fils téléphoniques, l'une pour l'émission, l'autre pour la réception à un noyau central HUB. Ainsi, le transceiver $TRC_1$ est relié au noyau central HUB par l'intermédiaire de la paire d'émission $PE_1$ et de la paire de réception $PR_1$. De même, le transceiver $TRC_2$ est relié au noyau central HUB par les deux paires $PE_2$ et $PR_2$, alors que le transceiver $TRC_i$ est relié au noyau central par les deux paires $PE_i$ et $PR_i$. Il convient de préciser qu'une paire de fils téléphoniques d'émission, tels que $PE_1$ est physiquement indépendante de la paire de fils téléphoniques de réception $PR_1$. Cela signifie que des signaux qui sont envoyés sur l'une des paires sont ignorés par l'autre. Pour chaque transceiver, les deux paires de fils téléphoniques sont reliées à celui-ci par l'intermédiaire de prises normalisées dites "Modular Jack" ISO 8877. Ces prises sont désignées par $MJ_1$, $MJ_2$, ..., $MJ_i$, ... à la figure 1.

Le rôle du noyau central HUB est essentiellement de récupérer les signaux provenant des différentes stations, de les remettre en forme, et de les amplifier pour les envoyer sur les autres stations.

Le segment élémentaire $SE_1$ du réseau local RLE décrit ci-dessus est relié, par exemple, aux autres segments élémentaires $SE_i$, $SE_j$, ..., etc, par l'intermédiaire du noyau central HUB qui est raccordé à un support de transmission tel qu'un câble COAX par l'intermédiaire de moyens de raccordement RAC.

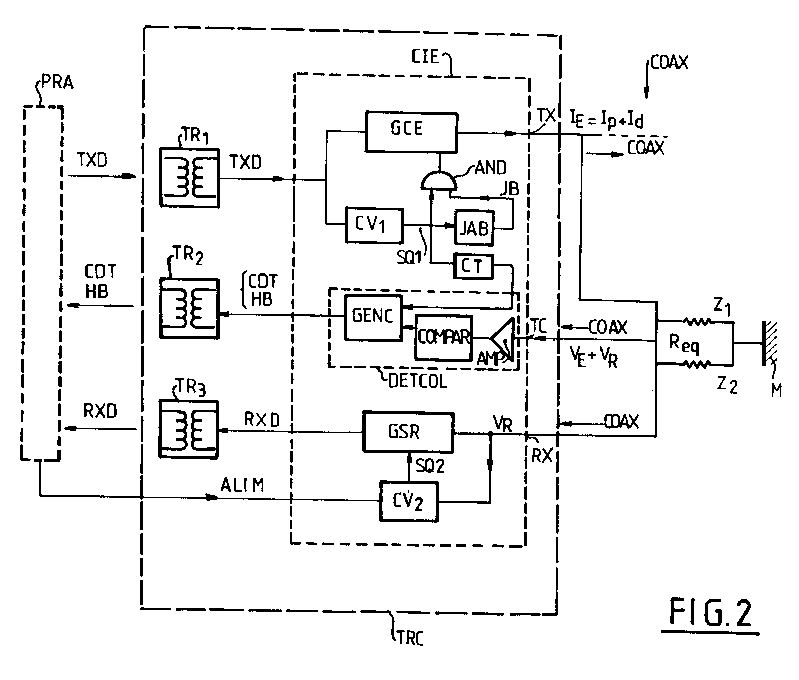

On considère désormais la figure 2 qui représente un transceiver TRC selon l'Art Antérieur utilisé dans un réseau Ethernet avec coaxial , le transceicer étant relié à la station associée de la même façon que les transceivers $TRC_1$ à $TRC_i$ le sont à leurs stations associées $S_1$ à $S_i$.

Un tel transceiver TRC comprend :
- un ensemble de transformateur $TR_1$, $TR_2$, $TR_3$,
- un circuit intégré CIE.

Les transformateurs $TR_1$ à $TR_3$ sont disposés entre une prise 15 points PR analogue aux prises $PRA_1$ à $PRA_i$ et le circuit intégré CIE.

Ce dernier comporte trois bornes de sortie TX, TC, RX (les deux bornes TC et RX étant reliées entre elles) connectées au coaxial COAX qui a été représenté à la figure 2, pour simplifier, sous la forme de son schéma électrique équivalent, à savoir un ensemble de deux impédances caractéristiques $Z_1$, $Z_2$ - (essentiellement ohmiques) placées en parallèle. La résistance équivalente à ces deux impédances caractéristiques $Z_1$, $Z_2$ est désignée par $R_{eq}$. L'une des bornes communes aux deux impédances caractéristiques $Z_1$, $Z_2$, est reliée à la masse M, l'autre borne commune étant connectée respectivement aux trois bornes de sortie TX, TC, RX du circuit intégré CIE.

Le but de l'utilisation des transformateurs $TR_1$ à $TR_3$ est l'isolement galvanique, c'est-à-dire d'une part la protection de l'homme vis à vis de l'ensemble station-media et d'autre part la protection du circuit intégré CIE de toute surtension qui pourrait survenir sur la ligne de transmission L, principalement à cause de la présence de fils d'alimentation en tension continue ALIM, cette tension continue alimentant chacun des circuits qui composent le circuit intégré CIE.

Le circuit intégré CIE comprend :
- un générateur de courant d'émission GCE,
- un circuit de validation $CV_1$,
- une porte ET AND,
- un circuit de temporisation JAB,
- un circuit de déclenchement CT d'un signal indiquant le bon fonctionnement de la détection de collision du transceiver TRC associé à la station,
- un générateur de collision GENC,
- un détecteur à seuil COMPAR,
- un amplificateur AMP,
- un générateur de signal de réception GSR,
- et un second circuit de validation $CV_2$.

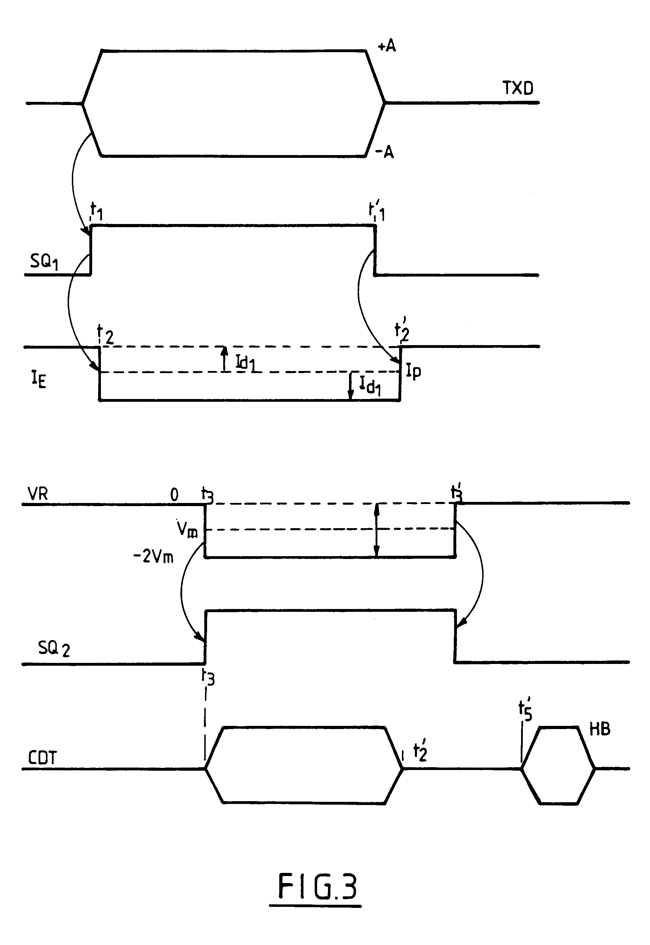

On suppose que la station émettrice S envoie un signal d'émission TXD dont la tension (voir figure 3) varie entre une amplitude positive A et une amplitude négative - A. Ce signal est supposé être émis entre les instants $t_1$ et $t'_1$. Ce signal TXD est transmis par le transformateur $TR_1$ à la fois au générateur de courant d'émission GCE et au premier circuit de validation $CV_1$. Ce dernier, en réponse au signal TXD, émet un signal logique de validation $SQ_1$ égal au 1 logique entre les instants $t_1$ et $t'_1$. Il est transmis sur l'une des entrées de la porte ET AND. Par ailleurs, ce même signal $SQ_1$ est envoyé au circuit de temporisation JAB, qui en réponse à ce dernier émet un signal égal au 1 logique pendant un temps parfaitement déterminé, égal à 20 millisecondes. Ce signal JB est envoyé sur la seconde borne de la porte ET AND. Lorsque le signal de sortie de la porte ET AND est égal au 1 logique (c'est-à-dire si la durée d'émission du signal TXD, et par suite du signal de validation $SQ_1$ est inférieure à 20 millisecondes), le générateur de courant d'émission GCE émet sur la borne de sortie TX un courant d'émission $I_E$, entre les instants $t_2$ et $t'_2$. Ce courant d'émission $I_E$ a une valeur moyenne $I_p$ non nulle. On peut dire que le courant d'émission $I_E$ est égal à la somme d'un courant de polarisation d'intensité $I_p$ et d'un courant d'émission de données $I_d$ de forme rectangulaire. On a donc :
$I_E = I_p + I_d$ où $I_d$ est dans la pratique courante par exemple égal à ± 45 milliampères et $I_p$ égal à - 45 milliampères. De fait, l'intensité du courant $I_E$ est égale suivant la valeur des bits de données de la trame d'émission soit à 0 soit à - 90 milliampères, et sa valeur moyenne de - 45 milliampères.

Le signal de validation $SQ_1$ est envoyé au circuit de déclenchement CT. Ce dernier, à l'instant $t'_5$ postérieur à l'instant $t'_1$ où le signal de validation $SQ_1$ retombe au 0 logique, avec $t'_5 - t'_1 = \Delta t$ (où $\Delta t$ est dans la pratique courante égal à 1 microseconde), déclenche le fonctionnement du générateur GENC qui émet alors un signal HB sous forme d'un signal carré de fréquence égale à 10 mégahertz et de durée égale à 1 microseconde. Ce signal est envoyé au transformateur $TR_2$ qui le retransmet par l'intermédiaire de la prise PR et par la ligne L à la station S. Ce signal indique à la station S que son signal d'émission a bien été reçu par le transceiver et que le générateur de collision fonctionne correctement.

Sur la borne RX du circuit intégré CIE on recueille le signal de réception $V_R$ émis par toute autre station que S provenant du câble coaxial COAX. Ce signal a la forme d'une tension de valeur moyenne non nulle $V_m$ (voir figure 3). Cette tension a la forme d'un signal rectangulaire qui correspond aux bits égaux à 0 ou 1 d'un signal de réception envoyé par une autre station que la station S sous forme d'une trame de données (voir ci-dessus). On suppose que le signal de réception $V_R$ est reçu entre les instants $t_3$ et $t'_3$. Il est également envoyé au circuit de validation $CV_2$ qui délivre le signal $SQ_2$ égal au 1 logique entre les instants $t_3$ et $t'_3$. Le signal $SQ_2$ émis par le circuit de validation $CV_2$ est envoyé au générateur de signal de réception GSR qui ne transmet le signal RXD égal à $V_R$, au transformateur $TR_3$ que lorsque le signal $SQ_2$ est présent, c'est-à-dire égal au 1 logique. La présence du circuit de validation $CV_2$, et par suite l'existence du signal de validation $SQ_2$ sont rendues nécessaires pour éviter que le générateur GSR ne transmette des signaux parasites au transformateur $TR_3$ et par suite à la station S associée. En effet, s'il n'y a pas de signal d'émission, et s'il y a seulement des parasites sur le coaxial le signal $SQ_2$ reste égal au 0 logique et de ce fait, GSR ne transmet pas ces parasites au transformateur $TR_3$.

Lorsqu'il y a présence simultanée sur le câble coaxial COAX d'un signal d'émission provenant de la station S et d'un signal de réception $V_R$ provenant d'une autre station (par exemple $S_j$) que celle-ci , on recueille sur la borne TC du circuit intégré CIE une tension :

$$V_C = V_E + V_R \quad (1)$$

où :

$$V_E = R_{eq} \times I_E = R_{eq} \times (I_p + I_{d_1}) \quad (2) \quad \text{avec} \quad I_E = I_p + I_{d_1}$$

et :

$$V_R = R_{eq} \times I_R = R_{eq} \times (I_p + I_{d_2}) \quad (3) \quad \text{avec} \quad I_R = I_p + I_{d_2}$$

On a donc, au minimum :

$$V_C = R_{eq} \times 2I_p$$

La tension $V_C$ est envoyée à l'amplificateur AMP qui l'envoie à un détecteur de seuil COMPAR.

Si l'on règle la tension de seuil du détecteur COMPAR à une valeur $V_S$ telle que :
$V_s = G \times R_{eq} \times I_p$, où G est le coefficient d'amplification de l'amplificateur AMP, on voit que s'il y a collision, le signal $V_C$ amplifié avec le gain G sera au minimum égal à :
$2G \times R_{eq} \times I_p$, valeur supérieure à la tension de seuil.

Dans ce cas, le détecteur de seuil COMPAR envoie un signal, par exemple égal au 1 logique, au générateur de collision GENC qui émet alors à l'instant $t_3$ où a lieu la collision, un signal carré de fréquence 10 mégahertz CDT envoyé au transformateur $TR_2$ qui le transmet à la station S, et ce, jusqu'à l'instant $t'_2$ où cesse la collision. La station S, lorsqu'elle reçoit ce signal l'interprète comme une collision et émet alors des données de brouillage pendant un certain temps, selon une procédure normalisée définie par la norme IEEE 802.3, avant d'attendre un certain temps pour réémettre à nouveau un message.

Il faut noter, qu'en l'absence de tout signal $V_R$ émis par une autre station que S, la borne RX du transceiver TRC, reçoit (puisqu'elle est reliée à TC) la tension $V_E$ correspondant à son propre courant d'émission. La station S vérifie donc, grâce au signal RXD alors transmis par GSR, que le transceiver TRC a bien envoyé sur le coaxial, un signal d'émission correspondant au signal d'émission TXD de la station et qu'ainsi le transceiver fonctionne correctement.

On peut dire que l'ensemble constitué par l'amplificateur AMP, le détecteur de seuil COMPAR et le générateur de collision GENC constitue un détecteur de collision DETCOL.

On trouvera de plus amples détails sur la structure et le fonctionnement du circuit intégré CIE dans la notice technique du constructeur National Semiconductors relative au circuit intégré DP.8392.

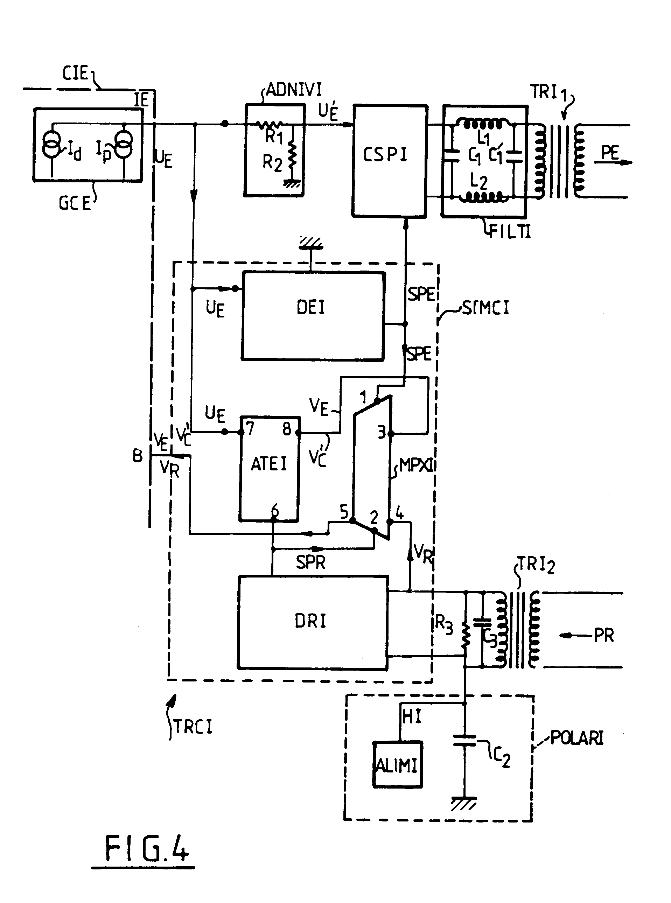

On considère désormais la figure 4 qui montre le transceiver selon l'invention à savoir TRCI, associé à la station S.

Ce transceiver comprend le circuit intégré CIE analogue à celui montré à la figure 2 et un circuit de simulation de collision SIMCI, simulant la superposition physique des signaux d'émission et de réception de la station.

Le circuit de simulation de collision SIMCI qu'on peut appeler encore simulateur de collision reçoit une première tension d'émission $U_E$ obtenue à partir du courant $I_E$ envoyé par le générateur de courant d'émission GCE du circuit intégré CIE. Il reçoit par ailleurs la tension $V_R$ du signal de réception, provenant d'une seconde station $S_j$ du réseau.

Ce simulateur de collision SIMCI remplit trois fonctions essentielles :

1) Lorsque la station S est seule à émettre, le simulateur de collision renvoie une seconde tension d'émission $V_E$ correspondant au courant d'émission $I_E$ sur les bornes RX et TC du circuit intégré CIE. Cette tension $V_E$ a une valeur moyenne $V_{Ea}$ inférieure en valeur absolue à la valeur moyenne $U_{Ea}$ de la première tension $U_E$, et telle que, après amplification par l'amplificateur AMP, elle reste inférieure à $V_S$, c'est-à-dire que $|G \times V_{Ea}| < |V_S|$. En fait, si la tension d'entrée de l'amplificateur correspondant à $V_S$, c'est-à-dire $V_S/G$ est de l'ordre de - 1,5 volt, on choisit $V_{Ea}$ de l'ordre de - 1 volt. Ainsi, le circuit de simulation de collision SIMCI réalise-t-il le rebouclage du signal d'émission de la station vers elle-même via le circuit intégré CIE, rôle qui était effectué par le coaxial COAX dans le réseau local selon l'Art Antérieur de la figure 2.

2) Lorsque la station S n'émet pas et qu'il y a un signal de réception présent sur la paire de réception PR, la tension $V_R$ du signal de réception est transmise par le circuit de simulation de collision SIMCI au circuit intégré CIE sur ses bornes TC et RX.

3) Si la station S émet en même temps qu'une station quelconque du réseau, il y a présence simultanée de la première tension d'émission $U_E$ et de la tension de réception $V_R$ aux bornes d'entrée du circuit de simulation de collision SIMCI. Le circuit de simulation envoie alors sur la borne TC (et également sur la borne RX) un signal $V'_C$ qui a une forme analogue à la seconde tension $V_E$, mais dont la valeur moyenne est beaucoup plus élevée (en valeur absolue). Ainsi, le circuit de simulation donne-t-il l'impression au circuit intégré CIE (au détecteur de collision DETCOL de ce dernier) qu'il reçoit un signal résultant de la superposition d'un signal d'émission et d'un signal de réception, alors qu'il ne réalise pas la superposition physique de ces deux signaux. Dans ce dernier cas, de fait, le signal de réception $V_R$ est ignoré et non transmis au circuit intégré CIE, mais celui-ci détecte de toute façon une collision par l'intermédiaire du circuit DETCOL, puisque la valeur moyenne de la tension $V'_C$ après amplification par AMP est supérieure (en valeur absolue) à la tension de seuil $V_S$. On peut donc bien dire que le circuit SIMCI simule la superposition physique des signaux d'émission et de réception. Dans l'exemple de réalisation préférée décrit ici, on a $V'_C = U_E$. $V'_C$ est donc un signal de simulation de collision.

La figure 4 montre également les éléments constitutifs essentiels du circuit de simulation de collision SIMCI.

Ces différents éléments sont :

- un circuit de détection du signal d'émission DEI,
- un circuit de détection du signal de réception DRI,
- un circuit d'adaptation de la tension du signal d'émission ATEI,
- un élément multiplexeur MPXI,
- les circuits de détection d'émission et de réception, à savoir DEI et DRI sont quasiment identiques dans leur constitution. Ils sont formés par des montages classiques de détection de seuil , constitués par exemple par deux éléments fabriqués par la Société MOTOROLA, sous la référence 10116. De tels détecteurs sont également décrits dans le Blue Book d'ETHERNET (version du réseau local ETHERNET produite par les Sociétés XEROX, INTEL et DEC).

Le circuit DEI reçoit la première tension d'émission $U_E$ et délivre un signal de présence d'émission SPE qui est envoyé sur une borne 1 du multiplexeur MPXI.

Le première tension $U_E$ est obtenue en envoyant le courant $I_E$ dans un adaptateur de niveau ADNIVI (voir figure 4) composé de deux résistances $R_1$ et $R_2$.

L'une des bornes de $R_1$ est connectée à la sortie du générateur GCE, la borne commune à $R_1$ et $R_2$ est connectée vers la paire d'émission PE par l'intermédiaire des circuits CSPI, FILTI et par l'intermédiaire du transformateur $TRI_1$, comme il sera décrit plus loin. La seconde borne de $R_2$ est reliée à la masse.

Dans l'exemple décrit ici où $R_1$ et $R_2$ sont choisies égales respectivement a 27 et 33 $\Omega$ , la valeur moyenne $U_{Ea} = (R_1 + R_2)I_{Ea}$, où la valeur moyenne $I_{Ea}$ de $I_E$ est de l'ordre de - 45 mA, est donc de - 2,7 volt.

De même, lorsqu'il y a présence d'un signal de réception $V_R$, le détecteur de signal de réception DRI délivre un signal SPR envoyé respectivement sur la borne 2 du multiplexeur MPXI et sur la borne 6 du circuit adaptateur de tension d'émission ATEI.

Le circuit d'adaptation de tension d'émission ATEI reçoit sur sa borne 7 la première tension d'émission $U_E$. Il délivre sur sa borne 8 un signal qui est soit égal à la seconde tension d'émission $V_E$ lorsque la station S associée au transceiver TRCI est seule à émettre, soit le signal $V'_C$ lorsque la station S émet simultanément avec une station quelconque du réseau. Les signaux $V_E$ ou $V'_C$ sont envoyés sur la borne 3 du multiplexeur MPXI.

Le multiplexeur reçoit également sur sa borne 4 le signal de réception $V_R$ et envoie par l'intermédiaire de sa borne 5 ce même signal aux bornes RX et TC du circuit intégré CIE. Ce signal $V_R$ n'est transmis que s'il n'y a pas émission par la station S.

Le fonctionnement plus détaillé du circuit SIMCI est le suivant :

Premier cas :

Il y a émission par la station d'un message et par suite production par le générateur GCE d'un courant d'émission $I_E$, alors qu'aucune autre station du réseau n'est en train d'émettre. Dans ce cas, le circuit de détection d'émission DEI délivre le signal SPE au multiplexeur MPXI qui reçoit sur sa borne 3 par ailleurs la seconde tension $V_E$ provenant du circuit adaptateur ATEI. Le multiplexeur MPXI transmet alors par l'intermédiaire de sa borne 5 la seconde tension $V_E$ aux bornes RX et TC du circuit intégré CIE.

Deuxième cas :

La station S n'émet pas alors qu'il y a présence d'un signal de réception émis par une autre station sur la paire de réception PR. Le signal $V_R$ est envoyé sur la borne 4 du multiplexeur MPXI dont la borne 2 reçoit le signal de présence de réception SPR. Dans ces conditions, il transmet alors au moyen de sa borne 5, le signal de réception $V_R$ aux bornes RX et TC du circuit intégré CIE.

Troisième cas :

La station S émet un message en même temps qu'une autre station du réseau. Un signal de réception est donc présent sur la paire de réception PR. Les signaux SPE et SPR de présence d'émission et de présence de réception sont envoyés sur les bornes 1 et 2 du multiplexeur MPXI qui reçoit sur sa borne 3 provenant du circuit adaptateur de tension d'émission ATEI le signal $V'_C$ alors qu'il reçoit sur sa borne 4 le signal $V_R$, le circuit adaptateur ATEI recevant par ailleurs sur sa borne 6 le signal SPR. Le multiplexeur MPXI ne transmet pas le signal $V_R$ aux bornes RX et TC. Par contre, c'est le signal $V'_C$ qui est transmis par le multiplexeur, au moyen de sa borne 5, aux bornes RX et TC, permettant alors au circuit DETCOL de détecter une collision.

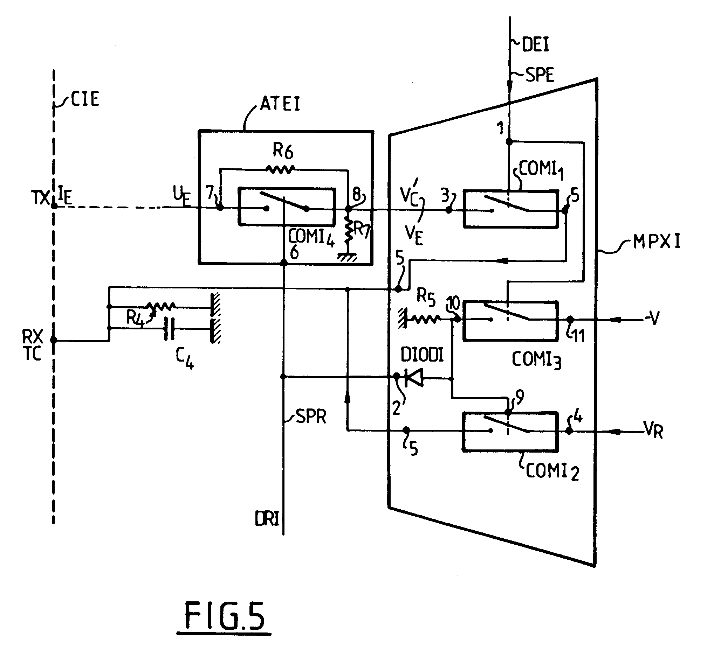

On considère la figure 5 qui représente un mode de réalisation particulier du circuit de simulation de collision SIMCI, et plus particulièrement le circuit adaptateur de tension ATEI et le multiplexeur MPXI.

Le circuit adaptateur de tension d'émission ATEI est formé par un pont diviseur de résistances $R_6$ et $R_7$ et un commutateur analogique COMI$_4$ monté en parallèle sur la résistance $R_6$. La borne commune à $R_6$ et au commutateur COMI$_4$ constitue l'entrée 7 du circuit ETEI et la borne commune à $R_6$, $R_7$ et COMI$_4$ constitue la sortie 8 connectée à l'entrée 3 du multiplexeur MPXI. La borne de commande d'ouverture et de fermeture de COMI$_4$ constitue la borne d'entrée 6 du circuit ETEI.

Le multiplexeur MPXI comprend les trois commutateurs analogiques COMI$_1$, COMI$_2$, COMI$_3$, la diode DIODI et la résistance $R_5$.

Les commutateurs COMI$_1$ à COMI$_4$ sont des commutateurs analogiques identiques les uns aux autres et sont par exemple des commutateurs 74 HC 40664V du constructeur SGS-THOMSON ou R.C.A..

L'une des bornes du commutateur COMI$_1$ constitue l'entrée 3 du multiplexeur alors que son autre borne constitue la sortie 5. Sa borne de commande d'ouverture et de fermeture est connectée à l'entrée 1 du multiplexeur de même que celle du commutateur COMI$_3$.

La fermeture ou l'ouverture du commutateur COMI$_1$ est donc commandée par le signal SPE envoyé à l'entrée 1.

La sortie 5 du multiplexeur est connectée aux bornes RX et TC du circuit intégré CIE. Ces deux dernières sont découplées par le circuit formé par la résistance $R_4$ et la capacité $C_4$.

L'une des bornes de COMI$_2$ constitue l'entrée 4 et reçoit donc le signal de réception $V_R$. Sa seconde borne est connectée à la sortie 5 du multiplexeur. Sa borne 9 de commande d'ouverture ou de fermeture est connectée d'une part à l'anode de la diode DIODI dont la cathode est connectée à la sortie 2 du multiplexeur et reçoit donc le signal SPR. L'anode de la diode DIODI est connectée par ailleurs à la borne 10 du commutateur COMI$_3$ et à l'une des bornes de la résistance de la charge $R_5$ de COMI$_3$ dont l'autre borne est connectée à la masse. L'autre borne 11 du commutateur COMI$_3$ est reliée à une tension négative - V, égale, dans un exemple de réalisation préféré, à - 9V.

Dans un exemple de réalisation préféré de réalisation de l'invention, les signaux SPE ou SPR sont égaux à 0 volt s'il y a présence d'un signal d'émission $U_E$ ou d'un signal de réception $V_R$ et égaux à - 9 V dans le cas contraire.

Par ailleurs, les commutateurs COMI$_1$ à COMI$_4$ sont fermés si leurs bornes de commande d'ouverture et de fermeture sont soumises à une tension nulle et ouverts si elle sont soumises à une tension négative de - 9 V.

Le fonctionnement du circuit adaptateur de tension ATEI et du multiplexeur MPXI est exposé en détail ci-après. Il existe quatre cas de fonctionnement qui sont les suivants :

Premier cas :

La station S est la seule du réseau à émettre. Il n'existe donc pas de signal de réception sur la paire de réception. Le commutateur COMI$_4$ recevant sur sa borne 6 de commande d'ouverture ou de fermeture un signal SPR dont la tension est égale à - 9 V, reste ouvert. Par contre, les deux commutateurs COMI$_1$ et COMI$_3$ qui recoivent sur leurs bornes de commande 1 le signal SPE dont la tension est nulle sont fermés. La fermeture de COMI$_3$ maintient ouvert le commutateur COMI$_2$ ce qui permet au circuit intégré CIE de ne point recevoir d'éventuels parasites présents sur la ligne de réception. Le circuit adaptateur envoie alors par l'intermédiaire du commutateur COMI$_1$ qui est fermé la tension $V_E$ sur les bornes RX et TC du circuit CIE. Comme COMI$_4$ est ouvert, la tension $V_E$, prise aux bornes de $R_7$ est telle que $V_E = (R_7/(R_6 + R_7)) \times U_E$. Dans l'exemple de réalisation décrit ici où $R_6 = 820\ \Omega$ et $R_7 = 510\ \Omega$, on a donc bien :

$V_{Ea} = -2,7 \times (510/1330) = -1 \text{ V}.$

Deuxième cas :

La station S n'émet pas et une autre station du réseau émet. Il y a donc présence d'un signal de réception $V_R$ sur la borne 4 du commutateur $COMI_2$. Le signal SPR est activé. Ce signal a une tension nulle. Cela entraîne la fermeture de $COMI_4$. Les commutateurs $COMI_1$ et $COMI_3$ sont ouverts, la borne 9 est pratiquement au potentiel nul ce qui ferme le commutateur $COMI_2$. De ce fait, le signal de réception $V_R$ est transmis aux bornes RX et TC du circuit CIE.

Troisième cas :

Il y a émission simultanée par la station S et une autre station du réseau. Le commutateur $COMI_4$ est fermé, ainsi que les commutateurs $COMI_1$ et $COMI_3$. La fermeture de ces derniers maintient ouvert le commutateur $COMI_2$. Comme le commutateur $COMI_4$ est fermé, la résistance $R_6$ est court-circuitée. On retrouve donc la première tension $U_E$ aux bornes de la résistance $R_7$. Le circuit ATEI délivre le signal $V'_C$ identique à $U_E$ qui est envoyé à travers le commutateur $COMI_1$ sur les bornes RX et TC, ce qui permet la détection de la collision (voir plus haut). On voit ainsi que pour détecter la collision au moyen du circuit DETCOL on modifie la valeur moyenne de la tension du signal délivré par le circuit ATEI.

On voit donc que, selon l'invention, on peut détecter une collision sans que celle-ci soit réalisée physiquement par superposition du signal d'émission et du signal de réception en un endroit quelconque du réseau.

Quatrième cas :

Aucune station n'émet sur le réseau. Les commutateurs $COMI_4$, $COMI_1$, $COMI_3$ et $COMI_2$ sont ouverts, et la diode DIODI, conduit. La borne RX est chargée par $R_4$ -C4 par rapport à la masse et il y a silence absolu sur cette borne.

On se réfère à nouveau à la figure 4 qui montre d'autres particularités du transceiver selon l'invention autre que le circuit de simulation SIMCI.

Afin d'éviter que des surtensions ne soient transmises par l'intermédiaire du transceiver sur les paires de fils téléphoniques d'émission et de réception, et réciproquement, on munit le transceiver de transformateurs $TRI_1$ et $TRI_2$ dont les sorties sont connectées respectivement à la paire d'émission PE et à la paire de réception PR.

Etant donné que le courant d'émission $I_E$ est polarisé et qu'il faut attaquer en tension le transformateur $TRI_1$, le courant $I_E$ est envoyé à l'adaptateur de niveau ADNIVI qui émet une tension $U'_E$ polarisée dont la valeur moyenne $V_p$ n'est pas nulle :

$V_p = U_{Ea} \times R_2/(R_1 + R_2) = -2,7 \times \frac{33}{60} = -1,5 \text{ V}$

Si l'on veut éviter que le transformateur n'ait son primaire saturé par cette tension $U'_E$ et par suite engendre des altérations du signal, il faut que ce dernier soit attaqué par une tension dont la valeur moyenne est nulle. On ajoute donc à la tension $U'_E$, par l'intermédiaire d'un circuit de suppression de polarisation CSPI, une tension continue de contrepolarisation dont la valeur est égale à $-V_p$. Ce circuit de suppression de polarisation CSPI est en fait un amplificateur différentiel dont une branche est reliée à une tension de seuil équivalente à celle de la valeur moyenne $V_p$. Cet étage différentiel joue donc le rôle d'un additionneur d'une tension égale et opposée à la valeur moyenne $-V_p$ du signal de sortie $U'_E$. On réalise le circuit CSPI au moyen d'un circuit ECL 10192 de la Société National Semiconductors.

Il est commandé par la signal SPE qui ne valide son fonctionnement que s'il y a émission par la station.

Entre le circuit de suppression de polarisation CSPI et le primaire du transformateur $TRI_1$ on dispose un filtre FILTI destiné à couper les signaux de fréquence trop élevée, c'est-à-dire les harmoniques du fondamental du signal d'émission qui se trouvent dans les flancs de celui-ci. En effet, le circuit ECL 10192 commute les fronts montant et descendant des différents bits constituant le signal d'émission de façon extrêmement brutale, ce qui crée des harmoniques de fréquence élevée. Il est donc nécessaire de les supprimer dès la sortie du circuit CSPI.

Ainsi qu'on peut le voir à la figure 4, ce circuit FILTI est par exemple constitué par deux inductances $L_1$ et $L_2$ placées en série avec le primaire du transformateur et par deux condensateurs $C_1$ et $C'_1$ placées en

parallèle.

Etant donné que le générateur de signaux de réception GSR du circuit CIE attend un signal $V_R$ ayant une valeur moyenne non nulle, et que le signal de réception envoyé par une station quelconque du réseau sur la paire de fils téléphoniques de réception PR a une valeur moyenne nulle, il est nécessaire d'ajouter au signal de réception une tension de polarisation. Cela est effectué par un circuit de polarisation POLARI qui ajoute donc un signal de polarisation au signal de réception SR présent sur la paire de réception PR. Ce circuit de polarisation POLARI est simplement constitué par un circuit d'alimentation ALIMI et délivrant une tension HI, égale, par exemple dans l'exemple de réalisation montré à la figure 4 à - 0,8 volts. On place une capacité de découplage $C_2$ aux bornes de l'alimentation ALIMI. En parallèle sur le secondaire du transformateur, on dispose un circuit de filtrage haute fréquence formé par la résistance $R_3$ et la capacité $C_3$. Ce filtrage permet d'envoyer un signal $V_R$ dont les différents bits sont parfaitement exploitables par le circuit GSR du circuit intégré CIE.

**Revendications**

1. Unité d'accès (TRCI) à un support de transmission (PE, PR) d'un réseau local (RLE) à méthode d'accès à test de porteuse et détection de collision (CSMA/CD) comprenant une pluralité de stations ($S_1$, $S_2$, $S_i$,..., etc), chaque station (S) étant associée à une unité d'accès (TRCI), laquelle comporte :
   - un générateur (GCE) de courant d'émission recevant les signaux émis par la station associée (S) et délivrant un signal d'émission sous forme d'un courant d'émission $I_E$ à valeur moyenne non nulle,
   - un générateur de signaux de réception (GSR) recevant les signaux provenant d'une autre station transmis par le support (PE, PR) sous forme d'une tension ($V_R$) à valeur moyenne non nulle,
   - un détecteur de collision (DETCOL) recevant d'une part le signal émis par la station et d'autre part tout signal émis par une autre station du réseau et envoyant à la station associée un signal indiquant si elle est seule à émettre ou s'il y a collision, lorsqu'il reçoit un signal dont la tension moyenne excède, en valeur absolue, une valeur prédéterminée,

   caractérisé en ce que, le support de transmission étant constitué par au moins deux paires de fils téléphoniques, l'une pour l'émission et l'autre pour la réception, elle comprend un circuit de simulation de collision (SIMCI) simulant la superposition physique des signaux d'émission et réception lequel comprend :
   - un circuit (DEI) détecteur de toute émission de la station associée, recevant la première tension d'émission $U_E$ et émettant un premier signal SPE de validation indiquant que la station associée émet,
   - un circuit (DRI) de signal de réception, recevant le signal $V_R$ de réception transmis par la paire téléphonique de réception (PR) et émettant un second signal SPR de validation indiquant la présence d'un signal de réception sur la paire de réception,
   - un circuit (ATEI) adaptateur de la tension d'émission recevant sur une première entrée d'une part la première tension d'émission $U_E$ et d'autre part sur une seconde entrée le second signal de validation SPR et délivrant à sa sortie soit la seconde tension d'émission $V_E$ lorsque la station associée est seule à émettre soit le signal $V'_C$ de simulation de collision.
   - un multiplexeur (MPXI) recevant le premier et le second signal de validation SPE et SPR, le signal de réception $V_R$, et la seconde tension d'émission $V_E$ ou le signal de simulation de collision $V'_C$ et transmettant soit le signal de réception $V_R$ lorsque la station associée n'est pas en train d'émettre, soit la seconde tension $V_E$ lorsque la station associée est seule à émettre, soit le signal de simulation de collision $V'_C$.

2. Unité d'accès selon la revendication 1 caractérisée en ce que les circuits détecteurs d'émission et de réception sont des circuits détecteurs à seuil.

3. Unité d'accès selon l'une des revendications 1 et 2 caractérisée en ce que le circuit adaptateur de tension (ATEI) est formé par un pont diviseur constitué d'une première résistance ($R_6$) et d'une seconde résistance ($R_7$) et d'un commutateur analogique ($COMI_4$) connecté en parallèle sur la première résistance et dont l'ouverture et la fermeture sont commandés par le second signal de validation, l'une des bornes de la première résistance constituant la première entrée, la borne commune aux deux résistances et au commutateur analogique constituant la sortie qui est connectée à la borne d'entrée du multiplexeur recevant la seconde tension d'émission ou le signal de simulation de collision, l'autre borne de la seconde résistance étant connectée à la masse.

**4.** Unité d'accès selon l'une des revendications 1, 2, 3, caractérisée en ce que le multiplexeur comprend un premier, un second et un troisième commutateurs analogiques (COMI$_1$, COMI$_2$, COMI$_3$), une diode (DIODI) et une troisième résistance (R$_5$), la première borne du premier commutateur (COMI$_1$) étant connectée à la sortie du circuit (ATEI), sa seconde borne étant connectée à l'entrée du détecteur de collision (DETCOL), les bornes de commandes d'ouverture et de fermeture du premier et du troisième commutateur qui sont reliées entre elles recevant le premier signal de validation, le second commutateur (COMI$_2$) recevant sur l'une de ses bornes le signal de réception et dont l'autre borne est connectée à l'entrée du détecteur de collision (DETCOL), sa borne de commande d'ouverture et de fermeture étant connectée d'une part à l'anode de la diode (DIODI) et à l'une des bornes du troisième commutateur dont l'autre borne est reliée à une tension négative, la cathode de la diode étant connectée à la sortie du circuit détecteur du signal de réception.

**5.** Unité d'accès selon l'une des revendications 1, 2, 3 caractérisée en ce que le générateur de courant d'émission GCE est connecté à la paire téléphonique d'émission par l'intermédiaire des éléments suivants placés en série : un adaptateur de niveau (ADNIVI) qui transforme le courant d'émission I$_E$ en une tension U$_E$ à valeur moyenne non nulle dont une fraction U'$_E$ est envoyée à un circuit de suppression de polarisation CSPI qui ajoute à celle-ci un signal continu dont la tension est égale et opposée à la valeur moyenne de cette fraction, la sortie du circuit de suppression étant connectée au primaire d'un transformateur (TRI$_1$) par l'intermédiaire d'un filtre (FILTI), le secondaire du transformateur étant connecté aux deux fils de la paire d'émission (PE).

**6.** Unité d'accès selon l'une des revendications 1 à 4, caractérisée en ce que le circuit de simulation (SIMCI) est connecté à la paire de fils téléphoniques de réception par l'intermédiaire d'un transformateur TRI$_2$, dont le primaire est connecté aux deux fils de la paire de réception (PR) et le secondaire est relié au circuit de simulation par l'intermédiaire d'un circuit de filtrage haute fréquence, un circuit de polarisation (POLARI) connecté entre une borne du secondaire et la masse envoyant sur le secondaire une tension continue de polarisation de telle sorte que le signal de réception V$_R$ ait une valeur moyenne non nulle.

**7.** Réseau local (RLE) à méthode d'accès à test de porteuse et détection de collision (CSMA/CD) comprenant une pluralité de stations (S$_1$, S$_2$, S$_i$,..., etc), chaque station (S) étant associée à une unité d'accès (TRCI), laquelle comporte :
- un générateur (GCE) de courant d'émission recevant les signaux émis par la station associée (S) et délivrant un signal d'émission sous forme d'un courant d'émission I$_E$ à valeur moyenne non nulle,
- un générateur de signaux de réception (GSR) recevant les signaux provenant d'une autre station transmis par le support (PE, PR) sous forme d'une tension (V$_R$) à valeur moyenne non nulle,
- un détecteur de collision (DETCOL) recevant d'une part le signal émis par la station et d'autre part tout signal émis par une autre station du réseau et envoyant à la station associée un signal indiquant si elle est seule à émettre ou s'il y a collision, lorsqu'il reçoit un signal dont la tension moyenne excède, en valeur absolue, une valeur prédéterminée,

caractérisé en ce que, le support de transmission étant constitué par au moins deux paires de fils téléphoniques, l'une pour l'émission et l'autre pour la réception, l'unité d'accès comprend un circuit de simulation de collision (SIMCI) simulant la superposition physique des signaux d'émission et de réception, ce circuit comprenant :
- un circuit (DEI) détecteur de toute émission de la station associée, recevant la première tension d'émission U$_E$ et émettant un premier signal SPE de validation indiquant que la station associée émet,
- un circuit (DRI) de signal de réception, recevant le signal VR de réception transmis par la paire téléphonique de réception (PR) et émettant un second signal SPR de validation indiquant la présence d'un signal de réception sur la paire de réception,
- un circuit (ATEI) adaptateur de la tension d'émission recevant sur une première entrée d'une part la première tension d'émission U$_E$ et d'autre part sur une seconde entrée le second signal de validation SPR et délivrant à sa sortie soit la seconde tension d'émission V$_E$ lorsque la station associée est seule à émettre soit le signal V'$_C$ de simulation de collision.
- un multiplexeur (MPXI) recevant le premier et le second signal de validation SPE et SPR, le signal de réception V$_R$, et la seconde tension d'émission V$_E$ ou le signal de simulation de collision V'$_C$ et transmettant soit le signal de réception V$_R$ lorsque la station associée n'est pas en train d'émettre, soit la seconde tension $V_E$ lorsque la station associée est seule à émettre, soit le signal de simulation de collision V'$_C$.

**Claims**

1. An access unit (TRCI) to a transmission medium (PE, PR) of a local network (RLE) of the carrier sense multiple access with collision detection (CSMA/CD) type comprising a plurality of stations ($S_1$, $S_2$, $S_i$, ..., etc), each station (S) being associated with an access unit (TRCI), which comprises:
   - a transmission current generator (GCE) receiving the signals transmitted by the associated station (S) and supplying a transmission signal in the form of a transmission current $I_E$ with a non-zero average value,
   - a reception signal generator (GSR) receiving the signals coming from another station transmitted by the medium (PE, PR) in the form of a voltage (VR) with a non-zero average value,
   - a collision detector (DETCOL) receiving on the one hand the signal transmitted by the station and on the other hand any signal transmitted by another station of the network and sending, to the associated station, a signal indicating whether it is the only one to transmit or whether a collision has occurred, when it receives a signal, the average voltage of which, expressed as an absolute value, exceeds a predetermined value,
   characterised in that, the transmission medium being constituted by at least two pairs of telephone wires, one for transmission and the other for reception, it comprises a collision simulation circuit (SIMCI), simulating the physical superimposition of transmission and reception signals, which comprises:
   - a detector circuit (DEI) for all transmissions from the associated station, receiving the first transmission voltage UE and transmitting a first validation signal SPE indicating that the associated station is transmitting,
   - a reception signal circuit (DRI), receiving the reception signal VR transmitted by the reception telephone pair (PR) and transmitting a second validation signal SPR indicating the presence of a reception signal on the reception pair,
   - a transmission voltage adaptor circuit (ATEI) receiving on the one hand the first transmission voltage UE at a first input and on the other hand the second validation signal SPR at a second input and supplying at its output either the second transmission voltage VE, if the associated station is the only one to transmit, or the collision simulation signal V'C,
   - a multiplexer (MPXI) receiving the first and the second validation signal SPE and SPR, the reception signal VR, and the second transmission voltage VE or the collision simulation signal V'C and transmitting either the reception signal VR, if the associated station is not in the process of transmitting, or the second voltage VE, if the associated station is the only one to transmit, or the collision simulation signal V'C.

2. An access unit according to claim 1, characterised in that the transmission and reception detector circuits are threshold detector circuits.

3. An access unit according to one of claims 1 and 2, characterised in that the voltage adaptor circuit (ATEI) is formed by a divider bridge constituted by a first resistor (R6) and a second resistor (R7) and by an analogue switch (COMI4) connected in parallel over the first resistor, the opening and the closing of which are controlled by the second validation signal, one of the terminals of the first resistor constituting the first input, the terminal common to the two resistors and to the analogue switch constituting the output which is connected to the input terminal of the multiplexer receiving the second transmission voltage or the collision simulation signal, the other terminal of the second resistor being connected to earth.

4. An access unit according to one of claims 1, 2, 3, characterised in that the multiplexer comprises a first, a second and a third analogue switch (COMI1, COMI2, COMI3), a diode (DIODI) and a third resistor (R5), the first terminal of the first switch (COMI1) being connected to the output of the circuit (ATEI), its second terminal being connected to the input of the collision detector (DETCOL), the opening and closing control terminals of first and the third switch, which are linked to one another, receiving the first validation signal, the second switch (COMI2) receiving at one of its terminals the reception signal and the other terminal of which is connected to the input of the collision detector (DETCOL), its opening and closing control terminal being connected on the one hand to the anode of the diode (DIODI) and to one of the terminals of the third switch, the other terminal of which is linked to a negative voltage, the cathode of the diode being connected to the output of the reception signal detector circuit.

5. An access unit according to one of claims 1, 2, 3, characterised in that the transmission current generator GCE is connected to the transmission telephone pair via the following elements placed in series: a level adapter (ADNIVI) which transforms the transmission current IE into a voltage UE with a non-zero average voltage, a fraction U'E of which is sent to a polarisation suppression circuit CSPI which adds to said fraction a continuous signal, the voltage of which is equal and opposite to the average value of the fraction, the output of the suppression circuit being connected to the primary of a transformer (TRI1) via a filter (FILTI), the secondary of the transformer being connected to the two wires of the transmission pair (PE).

6. An access unit according to one of claims 1 to 4, characterised in that the simulation circuit (SIMCI) is connected to the pair of reception telephone wires via a transformer TRI2, the primary of which is connected to the two wires of the reception pair (PR) and the secondary of which is linked to the simulation circuit via a high frequency filtering circuit, a polarisation circuit (POLARI), connected between a terminal of the secondary and the earth, sending to the secondary a continuous polarisation voltage such that the reception signal VR has a non-zero average voltage.

7. A local network (RLE) of the carrier sense multiple access with collision detection (CSMA/CD) type comprising a plurality of stations ($S_1$, $S_2$, $S_i$, ..., etc), each station (S) being associated with an access unit (TRCI), which comprises:
   - a transmission current generator (GCE) receiving the signals transmitted by the associated station (S) and supplying a transmission signal in the form of a transmission current $I_E$ with a non-zero average value,
   - a reception signal generator (GSR) receiving the signals coming from another station transmitted by the medium (PE, PR) in the form of a voltage (VR) with a non-zero average value,
   - a collision detector (DETCOL) receiving on the one hand the signal transmitted by the station and on the other hand any signal transmitted by another station of the network and sending, to the associated station, a signal indicating whether it is the only one to transmit or whether a collision has occurred, when it receives a signal, the average voltage of which, expressed as an absolute value, exceeds a predetermined value,
   characterised in that, the transmission medium being constituted by at least two pairs of telephone wires, one for transmission and the other for reception, the access unit comprises a collision simulation circuit (SIMCI) simulating the physical superimposition of transmission and reception signals, said circuit comprising:
   - a detector circuit (DEI) for all transmissions from the associated station, receiving the first transmission voltage UE and tansmitting a first validation signal SPE indicating that the associated station is transmitting,
   - a reception signal circuit (DRI), receiving the reception signal VR transmitted by the reception telephone pair (PR) and transmitting a second validation signal SPR indicating the presence of a reception signal on the reception pair,
   - a transmission voltage adaptor circuit (ATEI) receiving on the one hand the first transmission voltage UE at a first input and on the other hand the second validation signal SPR at a second input and supplying at its output either the second transmission voltage VE, if the associated station is the only one to transmit, or the collision simulation signal V'C,
   - a multiplexer (MPXI) receiving the first and the second validation signal SPE and SPR, the reception signal VR, and the second transmission voltage VE or the collision simulation signal V'C and transmitting either the reception signal VR, if the associated station is not in the process of transmitting, or the second voltage VE, if the associated station is the only one to transmit, or the collision simulation signal V'C.

## Patentansprüche

1. Zugriffseinheit (TRCI) für einen Übertragungsweg (PE, PR) eines lokalen Netzes (RLE) nach dem Zugriffsverfahren mit Trägertest und Kollisionsfeststellung (CSMA/CD) mit mehreren Stationen ($S_1$, $S_2$, $S_i$, ..., usw.), wobei jede Station (S) einer Zugriffseinheit (TRCI) zugeordnet ist, die folgendes enthält:

EP 0 369 833 B1

- einen Sendestromgenerator (GCE), der die von der zugehörigen Station (S) ausgesendeten Signale empfängt und ein Sendesignal in Form eines Sendestroms $I_E$ mit einem von Null abweichenden Mittelwert liefert,
- einen Empfangssignalgenerator (GSR), der die von einer anderen Station kommenden, durch den Übertragungsweg (PE, PR) in Form einer Spannung ($V_R$) mit einem von Null abweichenden Mittelwert übertragenen Signale empfängt,
- einen Kollisionsdetektor (DETCOL), der einerseits das von der Station ausgesendete Signal und andererseits jedes von einer anderen Station des Netzes ausgesendete Signal empfängt und zu der zugehörigen Station ein Signal schickt, das anzeigt, ob sie die einzige sendende Station ist oder ob eine Kollision vorliegt, wenn er ein Signal empfängt, dessen mittlere Spannung dem Absolutwert nach einen vorbestimmten Wert überschreitet,

**dadurch gekennzeichnet**, daß sie bei dem von wenigstens zwei Telefonleitungspaaren gebildeten Übertragungsweg, dem einen für das Senden und dem anderen für das Empfangen, eine Kollisionssimulationsschaltung (SIMCI) enthält, die die physische Überlagerung der Sendesignale und der Empfangssignale simuliert und enthält:

- eine Detektorschaltung (DEI) für jede Sendung der zugehörigen Station, die die erste Sendespannung UE empfängt und ein erstes Bestätigungssignal SPE aussendet, das anzeigt, daß die zugehörige Station sendet,
- eine Empfangssignalschaltung (DRI), die das von dem ersten Empfangs-Telefonleitungspaar (PR) ausgesendete Empfangssignal VR empfängt und ein zweites Bestätigungssignal SPR aussendet, das die Anwesenheit eines Empfangssignals an dem Empfangspaar anzeigt,
- eine Anpassungsschaltung (ATEI) für die Sendespannung, die einerseits an einem ersten Eingang die erste Sendespannung $U_E$ und andererseits an einem zweiten Eingang das zweite Bestätigungssignal SPR empfängt und an ihrem Ausgang die zweite Sendespannung $V_E$ liefert, wenn die zugehörige Station allein sendet, oder das Kollisionssimulationssignal $V'_C$ empfängt,
- einen Multiplexer (MPXI), der das erste Bestätigungsignal SPE und das zweite Bestätigungsignal SPR, das Empfangssignal $V_R$ und die zweite Sendespannung $V_E$ oder das Kollisionssimulationssignal $V'_C$ empfängt und entweder das Empfangssignal $V_R$ überträgt, wenn die zugehörige Station nicht sendet, oder die zweite Spannung $V_E$ empfängt, wenn die zugehörige Station allein sendet, oder das Kollisionssimulationssignal $V'_C$ überträgt.

2. Zugriffseinheit nach Anspruch 1, **dadurch gekennzeichnet**, daß die Sende- und Empfangsdetektorschaltungen Detektorschaltungen mit Schwellenwert sind.

3. Zugriffseinheit nach einem der Ansprüche 1 und 2, **dadurch gekennzeichnet**, daß die Spannungsanpassungsschaltung (ATEI) von einer Teilerbrücke aus einem ersten Widerstand ($R_6$) und einem zweiten Widerstand ($R_7$) sowie einem Analogumschalter ($COMI_4$) gebildet ist, der parallel zu dem ersten Widerstand geschaltet ist und dessen Öffnen und Schließen von dem zweiten Bestätigungssignal gesteuert sind, wobei eine der Klemmen des ersten Widerstands den ersten Eingang bildet, die gemeinsame Klemme der zwei Widerstände und des Analogumschalters den Ausgang bildet, der die die zweite Sendespanung oder das Kollisionssimulationssignal empfangende Eingangsklemme des Multiplexers bildet, während die andere Klemme des zweiten Widerstands an Masse angeschlossen ist.

4. Zugriffseinheit nach einem der Ansprüche 1, 2, 3, **dadurch gekennzeichnet**, daß der Multiplexer einen ersten, einen zweiten und einen dritten Analogumschalter ($COMI_1$, $COMI_2$, $COMI_3$), eine Diode (DIODI) und einen dritten Widerstand ($R_5$) enthält, wobei die erste Klemme des ersten Umschalters ($COMI_1$) an den Ausgang der Schaltung (ATEI) angeschlossen ist, seine zweite Klemme an den Eingang des Kollisionsdetektors (DETCOL) angeschlossen ist, die Steuerklemmen für das Öffnen und das Schließen des ersten und des dritten Umschalters, die miteinander verbunden sind, das erste Bestätigungssignal empfangen, der zweite Umschalter ($COMI_2$) an einer seiner Klemmen das Empfangssignal empfängt, während seine andere Klemme an den Eingang des Kollisionsdetektors (DETCOL) angeschlossen ist, während seine Steuerklemme für das Öffnen und das Schließen einerseits an die Anode der Diode (DIODI) und an eine der Klemmen des dritten Umschalters angeschlossen ist, dessen andere Klemme an eine negative Spannung gelegt ist, wobei die Katode der Diode mit dem Ausgang der Detektorschaltung für das Empfangssignal verbunden ist.

5. Zugriffseinheit nach einem der Ansprüche 1, 2, 3, **dadurch gekennzeichnet**, daß der Sendestromgenerator GCE an das Sende-Telefonleitungspaar über folgende in Serie geschaltete Elemente ange-

15

EP 0 369 833 B1

schlossen ist: eine Pegelanpassungsschaltung (ADNIVI), die den Sendestrom $I_E$ in eine Spannung $U_E$ mit einem von Null verschiedenen Mittelwert umwandelt, von der ein Bruchteil $U'_E$ an eine Vorspannungsunterdrückungsschaltung CSPI geschickt wird, die ein Gleichspannungssignal hinzufügt, dessen Spannungswert entgegengesetzt und gleich dem Mittelwert dieses Bruchteils ist, wobei der Ausgang der Unterdrückungsschaltung an die Primärwicklung eines Transformators ($TRI_1$) über ein Filter (FILTI) angeschlossen ist, wobei die Sekundärwicklung des Transformators mit den zwei Leitungen des Sendepaars (PE) verbunden ist.

6.  Zugriffseinheit nach einem der Ansprüche 1 bis 4, **dadurch gekennzeichnet**, daß die Simulationsschaltung (SIMCI) an das Empfangs-Telefonleitungspaar über einen Transformator $TRI_2$ angeschlossen ist, dessen Primärwicklung mit den zwei Leitungen des Empfangspaars (PR) verbunden ist, und dessen Sekundärwicklung an die Simulationsschaltung über eine Hochfrequenz-Filterschaltung angeschlossen ist, wobei eine Vorspannungsschaltung (POLARI), die zwischen eine Klemme der Sekundärwicklung und Masse angeschlossen ist, an die Sekundärwicklung eine Gleich-Vorspannung anlegt, derart, daß das Empfangssignal $V_R$ einen von Null verchiedenen Mittelwert hat.

7.  Lokales Netz (RLE) mit einem Zugriffsverfahren mit Trägertest und Kollisionsertassung (CSMA/CD), mit mehreren Stationen ($S_1$, $S_2$, $S_i$, ..., usw.), wobei jede Station (S) einer Zugriffseinheit (TRCI) zugeordnet ist, die folgendes enthält:
    - einen Sendestromgenerator (GCE), der die von der zugehörigen Station (S) ausgesendeten Signale empfängt und ein Sendesignal in Form eines Sendestroms $I_E$ mit einem von Null abweichenden Mittelwert liefert,
    - einen Empfangssignalgenerator (GSR), der die von einer anderen Station kommenden, durch den Übertragungsweg (PE, PR) in Form einer Spannung ($V_R$) mit einem von Null abweichenden Mittelwert übertragenen Signale empfängt,
    - einen Kollisionsdetektor (DETCOL), der einerseits das von der Station ausgesendete Signal und andererseits jedes von einer anderen Station des Netzes ausgesendete Signal empfängt und zu der zugehörigen Station ein Signal schickt, das anzeigt, ob sie die einzige sendende Station ist oder ob eine Kollision vorliegt, wenn er ein Signal empfängt, dessen mittlere Spannung dem Absolutwert nach einen vorbestimmten Wert überschreitet,
    **dadurch gekennzeichnet**, daß sie bei dem von wenigstens zwei Telefonleitungspaaren gebildeten Übertragungsweg, dem einen für das Senden und dem anderen für das Empfangen, eine Kollisionssimulationsschaltung (SIMCI) enthält, die die physische Überlagerung der Sendesignale und der Empfangssignale simuliert und enthält:
    - eine Detektorschaltung (DEI) für jede Sendung der zugehörigen Station, die die erste Sendespannung UE empfängt und ein erstes Bestätigungssignal SPE aussendet, das anzeigt, daß die zugehörige Station sendet,
    - eine Empfangssignalschaltung (DRI), die das von dem ersten Empfangs-Telefonleitungspaar (PR) ausgesendete Empfangssignal VR empfängt und ein zweites Bestätigungssignal SPR aussendet, das die Anwesenheit eines Empfangssignals an dem Empfangspaar anzeigt,
    - eine Anpassungsschaltung (ATEI) für die Sendespannung, die einerseits an einem ersten Eingang die erste Sendespannung $U_E$ und andererseits an einem zweiten Eingang das zweite Bestätigungssignal SPR empfängt und an ihrem Ausgang die zweite Sendespannung $V_E$ liefert, wenn die zugehörige Station allein sendet, oder das Kollisionssimulationssignal $V'_C$ empfängt,
    - einen Multiplexer (MPXI), der das erste Bestätigungssignal SPE und das zweite Bestätigungssignal SPR, das Empfangssignal $V_R$ und die zweite Sendespannung $V_E$ oder das Kollisionssimulationssignal $V'_C$ empfängt und entweder das Empfangssignal $V_R$ überträgt, wenn die zugehörige Station nicht sendet, oder die zweite Spannung $V_E$ empfängt, wenn die zugehörige Station allein sendet, oder das Kollisionssimulationssignal $V'_C$ überträgt.

16

COAX

RLE

RAC$_1$

SE$_i$ , SE$_j$ ___

H U B

PE$_1$

PE$_2$ PR$_2$

PR$_i$

PR$_1$

PE$_i$

SE$_1$

MJ$_1$

MJ$_2$

MJ$_i$

TRC$_1$

TRC$_2$

TRC$_i$

PRA$_1$

L$_1$

PRA$_2$

L$_2$

PRA$_i$

L$_i$

S$_1$

S$_2$

S$_i$

# FIG.1

## FIG.2

EP 0 369 833 B1

FIG.3

FIG.4

FIG.5

EP 0 369 833 B1